# EUROPEAN PATENT SPECIFICATION

(11) **EP 1 971 076 B1**
(45) Date of publication and mention of the grant of the patent: **13.04.2016**
(21) Application number: 07721679.4
(22) Date of filing: 28.05.2007
(51) Int. Cl.: H04L 29/06, H04L 12/24, G06F 21/56

(54) **A CONTENT FILTERING SYSTEM, DEVICE AND METHOD**
INHALTSFILTERUNGSSYSTEM, -VORRICHTUNG UND -VERFAHREN
SYSTÈME, DISPOSITIF ET PROCÉDÉ DE FILTRAGE DE CONTENU

(30) Priority: 11.07.2006 CN 200610100874; 10.11.2006 CN 200610138277
(43) Date of publication of application: 17.09.2008
(73) Proprietor: Intertrust Technologies Corporation, Sunnyvale, CA 94085 (US)
(72) Inventor: ZHAO, Qin, Shenzhen, Guangdong 518129 (CN); ZHU, Yongsheng, Shenzhen, Guangdong 518129 (CN)
(74) Representative: Finnegan Europe LLP
(86) International application number: PCT/CN2007/070056
(87) International publication number: WO 2008/009224

(56) References cited:
- WO-A1-2004/032451
- WO-A1-2006/030227
- CN-A- 1 455 574
- US-A1- 2002 178 381
- US-A1- 2003 182 420
- US-A1- 2004 235 503
- US-A1- 2006 085 504
- US-B1- 6 233 618

## Description

### Field of Invention

The present invention relates to the technology of screening content transmitted in the network, and particularly, to a system, apparatus and method for content screening for a mobile network.

### Background of the Invention

At present, mobile terminal users can enjoy more and more colorful mobile services with more and more powerful mobile terminals. However, such information as illegal messages, junk mails, mobile phone viruses and eroticism also comes along, disturbing the mobile terminal users. The mobile terminal users are increasingly eager to get rid of such information as mobile phone viruses and junk mails. Meanwhile, mobile operators also hope to protect their networks from attacks of the mobile phone viruses and junk mails, and provide, for the mobile terminal users subscribing in their networks, high quality services and further provide customized content screening service, so as to improve user experiences. The customized content screening service includes the following.
1) Parents require protection for underage children using mobile terminals from content relating to eroticism, violence and gambling.
2) Employers expect to guarantee that employees using mobile terminals will not get involved, via the mobile terminals during office hours, in Internet entertainment irrelevant to their jobs, e.g., online chatting, online games, online business and stream media download, etc.
3) The mobile terminal users require protection against cheating and befooling of charging servers, and wish to avoid personal information exposure or being charged in ignorance caused by sending information by mistake, e.g., sending a short message.
4) Some high-end mobile terminal users hope to customize high-level protection against the viruses and junk information for mobile terminals.

Currently, different content screening apparatuses are designed for different services in the mobile network, fitting the characteristics of the services and operable for screening corresponding services. For example, a short message filter for screening sensitive texts is designed for a short message service, a multimedia message filter for screening eroticism and illegal graphics is designed for a multimedia message service, and there are also specific filters based on the Wireless Application Protocol (WAP). These filters are usually configured at the network side of a packet switched network managed by a mobile operator and are specific content oriented, however, these filters are designed for different services and cannot be shared with each other in general, and the mobile terminal users can not customize screening criteria according to their demands.

The inventor of the present invention finds that the conventional screening mechanism for the services has the following disadvantages: simple screening function without screening information sharing, i.e., a content screening apparatus for one service handles the service only and different content screening apparatuses are unable to share screening results and experiences; lack of customized service for the mobile terminal users, i.e., a service adopts unified screening criteria and no customized screening criteria based on the demands of the mobile terminal users are allowed; and screening leaks, i.e., when no content screening apparatus for a certain service is configured at the network side of the packet switched network managed by the mobile operator, viruses and junk information spreading via the service will damage the experience of the mobile terminal users, or even cause the network side to crash. Therefore, a content screening technique for protecting the mobile terminal users from accessing inappropriate content is needed to satisfy the demands of the mobile terminal users for content screening.

US 6,233,618 B1 discloses access control of networked data. According to this method, the access control process analyses data in each request from the clients and determines if the request should be forwarded for processing by a server to which it is destined.

US 2003/182420 A1 discloses method, system and apparatus for monitoring and controlling internet site content access.

US 2004/235503 A1 discloses method and apparatus for screening SMS/MMS-based messages

US 2002/178381 A1 discloses only a system and method for identifying undesirable content in responses sent in reply to a user request for content. A proxy server sends a request from a user to a target server. Upon receipt of the response from the target server, the proxy server scan the response ,which includes any attachments ,for undesirable content, such as junk e-mails, computer viruses, and/or other undesirable content.

WO 2006/030227 A1 discloses a network-based security platform. A content processor (CP) employed by the content security gateway (CSG) enables it to deliver a number of services (e.g. URL filtering, Anti-Virus) where the services are purchases and used by subscribers. When a streamed date is need inspected by the CSG, the streamed data is sent to a content identification function which identifies it as an HTML page, and the URL Filtering service processor determines if the page should be blocked. If the URL Filtering service does determine that the page contains content that should be blocked, then it returns the block page to the stream controller, including the reason for the block.

US 2006/085504 A1 discloses a global email classification system and a method enables email messages to be classified based on various factors into many categories.

### Summary of the Invention

Embodiments of the present invention provide a content screening apparatus according to claim 1, a content screening system according to claim 4, and a method for content screening according to claim 8, which screen traffics of different services in a centralized manner and satisfy demands of a mobile terminal user for content screening.

It can be seen from the above technical scheme that the content screening apparatus provided by the embodiments of the present invention not only screens content in a centralized manner, but also allows customized screening of the content for the mobile terminal user according to screening criteria customized by the mobile terminal user subscribing to the content screening service for the mobile terminal. In addition, the content screening apparatus provided by the embodiments of the present invention in the mobile network is able to intercept content sent to the mobile terminal or screen the content on demands of the mobile terminal or other content screening requesters. Hence the embodiments of the present invention provide a centralized screening service for different services and thus satisfy demands of different users for content screening.

### Brief Description of the Drawings

Figure 1 is a schematic diagram of a content screening system provided in an embodiment of the present invention for a mobile network.
Figure 2 is a schematic diagram illustrating the structure of a content screening apparatus provided in an embodiment of the present invention.
Figure 3 is a schematic diagram illustrating the structure of a content screening server provided in an embodiment of the present invention.
Figure 4 is a flow chart illustrating the content screening server processing a message in accordance with an embodiment of the present invention.
Figure 5 is a flow chart illustrating the process of content screening inside a content screening module in accordance with an embodiment of the present invention.
Figure 6 is a flow chart illustrating the process of content screening in a Callable mode in an embodiment of the present invention.
Figure 7 is a flow chart illustrating the process of content screening in a Proxy mode in an embodiment of the present invention.

### Detailed Description of the Invention

A detailed description of the embodiments of the present invention is provided hereinafter with reference to the accompanying drawings.

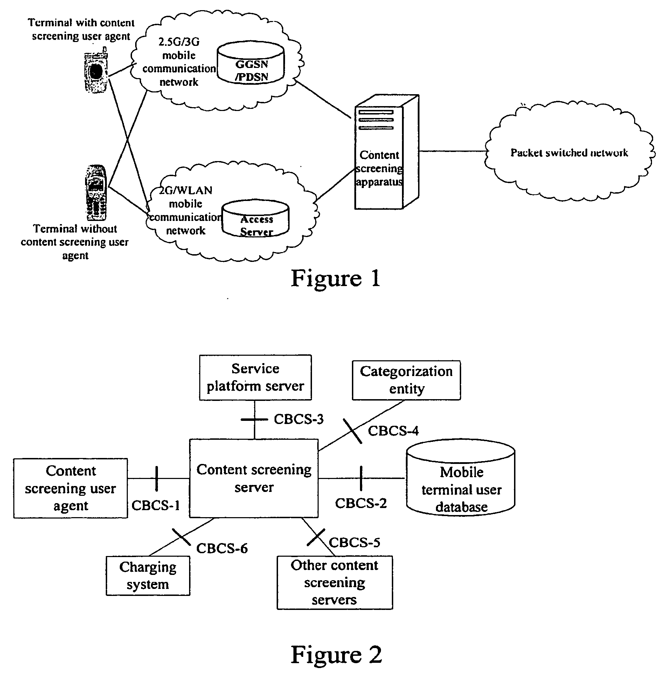

Figure 1 is a schematic diagram of a content screening system provided in an embodiment of the present invention for a mobile network. As shown in Figure 1, the content screening system includes a mobile terminal and a content screening apparatus. The content screening apparatus is configured between a mobile communication network and a packet switched network, for intercepting and screening a message containing content from the packet switched network and sending the screened message to the mobile terminal. Meanwhile, the mobile terminal may adopt a content screening user agent in the mobile communication network, and the content screening user agent enables the mobile terminal to send the message containing unscreened content to the content screening apparatus for screening. In this embodiment, the mobile terminal may function as a content screening requester requesting content screening, or as a message receiver receiving screened content.

In the embodiment, the mobile communication network may be a 2G, 2.5G or 3G network defined by 3rd Generation Partnership Project (3GPP) or 3GPP2, or a mobile communication network accessed by a Wireless Local Area Network (WLAN). The packet switched network may be the Internet or the packet switched network managed by a mobile operator, etc. The packet switched network managed by a mobile operator includes various mobile service platforms, e.g., short message centers, multimedia message centers and WAP servers, etc.

In the embodiment of the present invention, the screening may include one or more of virus screening, anti-junk screening, anti-illegal-information screening and customized content screening of mobile terminal users. A result generated after the screening may include the screened content or a screening judgment result, e.g., when a content screening requester (including but not limited to a mobile terminal, a service engine or a proxy server) chooses to delete or display the screened content, the content screening apparatus or the mobile terminal will perform a corresponding operation based on the choice of the content screening requester.

In the embodiment, the content screening user agent is an application of the mobile terminal, specifically, is a content screening service provided by the mobile terminal. The content screening user agent can be set in the mobile terminal, and the content screening service provided by the mobile terminal includes the following:
first, subscription of a content screening service, including subscription of customized content screening criteria of the mobile terminal user, dynamic modification of the customized content screening criteria of the mobile terminal user which is subscribed, and confirmation of a subscription message; where the subscription of a content screening service may not be implemented by the content screening user agent, but be provided by business offices or Portals of operators of the content screening service;
second, when the unscreened content received at the mobile terminal are detected, the unscreened content shall be deleted, or a content screening request containing the unscreened content shall be initiated to the content screening apparatus, and the content screening apparatus screens the content and returns a screening result to the mobile terminal;
third, participation in confirmation and feedback activities of the content screening service, for example, when unable to determine whether certain content shall be intercepted, the content screening apparatus returns a default content processing result with an explanation message to the mobile terminal; in response to receiving an instruction sent by the mobile terminal via the content screening user agent, the content screening apparatus intercepts the content or sends the content to the mobile terminal; for another example, when the content screening apparatus sends content which should be intercepted to the mobile terminal by mistake, the mobile terminal sends a processing error message via the content screening user agent to the content screening apparatus, and the content screening apparatus improves the content screening function based on the processing error message in response to receiving the processing error message.

In the embodiment of the present invention, the content screening apparatus may screen the content to be sent to the mobile terminal (including the content from the Internet or from the packet switched network managed by the mobile operator) in two modes. One mode is to adopt active interception of the content, i.e., Proxy mode; the other mode is to screen the content when a certain requester request the screening, i.e., Callable mode. In the Proxy mode, the content screening apparatus intercepts all content passing through the mobile communication network, performs a public screening, and determines whether user customized content screening should be performed based on whether the mobile terminal user receiving the content is a content screening service subscriber. In the Callable mode, when the mobile terminal configured with the content screening user agent detects with the content screening user agent that the received content have not been screened by the content screening apparatus, the mobile terminal may send the received content to the content screening apparatus for screening. And the content not screened by the content screening apparatus may be received from an infrared interface, a Bluetooth interface, a WiFi interface or a portable storage media, or from the packet switched network.

Figure 2 is a schematic diagram illustrating the structure of the content screening apparatus provided in an embodiment of the present invention. As shown in Figure 2, the content screening apparatus in this embodiment includes: a content screening server, a mobile terminal user database and a categorization entity. The mobile terminal user database and the categorization entity are connected to the content screening server respectively, and the content screening server is connected to a mobile terminal to provide a content screening service for the mobile terminal.

In the embodiment of the present invention, the content screening server provides two screening functions: centralized public content screening and user customized content screening. The centralized public content screening aims at virus screening, junk information and illegal information interception set by an operator in order to ensure the security of the mobile communication network or the packet switched network managed by the operator and further to provide high quality services for users. The user customized content screening aims at screening the content to be received by a mobile terminal according to the user customized content screening criteria to which the mobile terminal user subscribes. The content screening server is connected to all mobile service platforms and Internet application platforms, and all content from the Internet (e.g. emails, web pages, etc.) must be screened by the content screening server before being sent to the mobile terminal; meanwhile, short messages, multimedia messages and WAP applications managed by the mobile operator must be screened by the content screening server before being sent to the mobile terminal as well.

In the embodiment of the present invention, the mobile terminal user database stores service information related to the mobile terminal user, e.g., a content screening log, subscribed content screening criteria and interface information, etc.; and provides the service information to the content screening server when the content screening server screens the content to be sent to the mobile terminal in the manner of the user customized content screening.

The categorization entity correctly categorizes and/or grades the content from the content screening server or from a content/service provider so that the content screening server may filter the content better. The categorization entity may be a third party trusted by the content screening server and the categorizing mechanism of the categorization entity complies with rules and standards set by authorities. The categorization entity may also categorize and/or grade content according to a request from a content screening requester but not from the content screening server, and returns the categorized and/or graded content to the content screening requester.

In the embodiment of the present invention, the mobile service platforms and the Internet application platforms are generally referred to as service platform servers, including various service platform servers in a mobile network and Internet service platform servers. The service platform servers in the mobile network include short message centers, multimedia message centers, WAP gateways and Push gateways; and the Internet service platform servers include various content/service provider servers, Web servers, email servers and unified message servers. In the embodiment of the present invention, the content from the service platform servers are screened by the content screening server before being sent to a mobile terminal.

The content screening apparatus provided in the embodiment of the present invention may futher include a charging system connected to the content screening server and configured to charge for the content screening. The charging system may adopt two charging modes: monthly charging mode and traffic-volume-based charging mode. When the traffic-volume-based charging mode is adopted, the content screening server generates and sends a content screening bill to the charging system, and the charging system charges for the content screening according to the content screening bill from the content screening server. When the monthly charging mode is adopted, the content screening server does not generate the content screening bill.

In the embodiment of the present invention, the content screening server in the content screening apparatus may also be connected to other content screening servers.

Table 1 shows an interface between the content screening server in the embodiment of the present invention and a mobile terminal with the content screening user agent, or the mobile terminal user database, or a service platform server, or the categorization entity, or another content screening server, or the charging system.

**Table 1**

| Interface | Description |
|---|---|
| Categorization-Based Content Screening (CBCS-1) | The interface between a mobile terminal with the content screening user agent and the content screening server, mainly configured by the content screening user agent for subscribing to or invoking a content screening service, and receiving content screened by the content screening server. |
| CBCS-2 | The interface between the mobile terminal user database and the content screening server, mainly configured by the content screening server for invoking related user information, e.g., screening criteria to which a user subscribers, and for returning a screening log. |
| CBCS-3 | The interface between a service platform server and the content screening server, mainly configured by the content screening server for intercepting the content for screening. |
| CBCS-4 | The interface between the categorization entity and the content screening server, mainly configured by the content screening server for invoking a content categorizing/grading function. |
| CBCS-5 | The interface between different content screening servers, mainly operable for charging between providers of different content screening services and invoking home content screening service by a visited content screening server when a mobile terminal is roaming. |
| CBCS-6 | The interface between the charging system and the content screening server, mainly configured by the charging system for obtaining a content screening bill for charging. |

In an embodiment of the present invention, the content screening apparatus in the mobile network may only include the content screening server without any other entities. In this case, the content screening server receives a content screening request containing content to be screened or intercepts content to be screened, screens the content and sends a screening result to an entity requesting content screening or to a receiver of the content.

When the content screening request containing the content to be screened or the intercepted content to be screened has not been categorized and/or graded yet but needs to be categorized and/or graded, the content screening apparatus may further include a categorization entity for categorizing/grading the intercepted content to be screened or the content to be screened contained in the content screening request. The categorization entity in the content screening apparatus may also categorize and/or grade content from other requesters.

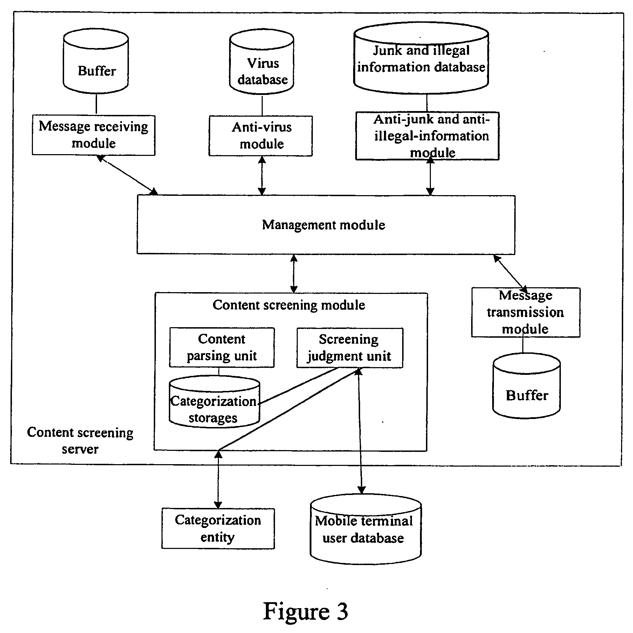

Figure 3 is a schematic diagram illustrating the structure of a content screening server provided in an embodiment of the present invention. As shown in Figure 3, the content screening server includes a management module, a message receiving module, an anti-virus module, an anti-junk and anti-illegal-information module, a content screening module and a message transmission module.

The management module obtains content to be screened from the message receiving module, instructs the anti-virus module, the anti-junk and anti-illegal-information module and the content screening module to process the content, generates a final screening result based on an anti-virus result from the anti-virus module, an anti-junk and anti-illegal-information result from the anti-junk and anti-illegal-information module and a content screening result from the content screening module, and sends the final screening result to the message transmission module.

The message receiving module, including a buffer, receives and parses a message to obtain the content to be screened. The message may be sent by a mobile terminal with the content screening user agent and contain content or content features; or the message may be intercepted by the content screening server from a service platform server and contain content. The message receiving module determines, according to the processing status of the management module, whether to buffer the parsed content in the buffer for waiting to be processed.

The anti-virus module, including a virus database, scans, identifies and screens viruses in the content according to an instruction from the management module, and sends the anti-virus result to the management module. The anti-virus module may scan and kill viruses in two manners to provide the virus screening service in different levels. In one manner, the content is compared with the virus features in the virus database so that known viruses may be screened out. In another manner, possible new viruses, e.g., variants of known viruses, are found and screened out through heuristics. The virus screening service provided by the operator may usually screen out known viruses, and the virus database may be maintained by a third party which regularly updates and manages the virus database in a centralized manner.

The anti-junk and anti-illegal-information module, including a junk and illegal information database, screens out the junk information and the illegal information from the content with a determined manner according to the instruction from the management module, e.g., blacklist, address analysis, header analysis, keyword screening, etc., and sends an anti-junk and anti-illegal-information result to the management module. The junk and illegal information database stores the features of known junk and illegal information, including domain names, IP addresses and blacklists, etc. The illegal information refers to content of hidden threats to national security and society stability, e.g., extreme violence information and illegal gambling information. The illegal information is set by the government/operator, and the junk and illegal information database can be maintained by a third party and updated in real time.

The content screening module screens content based on the instruction from the management module according to both the categorizing and/or grading result of the content and the screening criteria to which the mobile terminal user subscribes. The screening criteria is from the mobile terminal user database outside the content screening server, and the categorizing and/or grading result is generated by the categorization entity outside the content screening server. Furthermore, the content screening module saves the content screening log in the mobile terminal user database outside the content screening server and sends the screening result to the management module.

The message transmission module, including a buffer, encapsulates the final screening result from the management module and sends the encapsulated final screening result to the mobile terminal which should receive the message.
In the embodiment of the present invention, the mobile terminal user database may be integrated in the content screening server, which is different from the mobile terminal user database outside the content screening server in that: the information stored in the integrated mobile terminal user database is configured in the content screening server and the content screening service is managed totally by the mobile operator, no third party is allowed to provide the content screening service in such situation. Therefore the definitions of interfaces in the architecture of the content screening service are reduced (the CBCS-2 interface is omitted), and the speed of screening is increased because the process of invoking the mobile terminal user information is also omitted.

Similarly, the categorization entity may also be integrated into the content screening server in an embodiment of the present invention. In such a case, the CBCS-4 interface will be an internal interface in the content screening server.

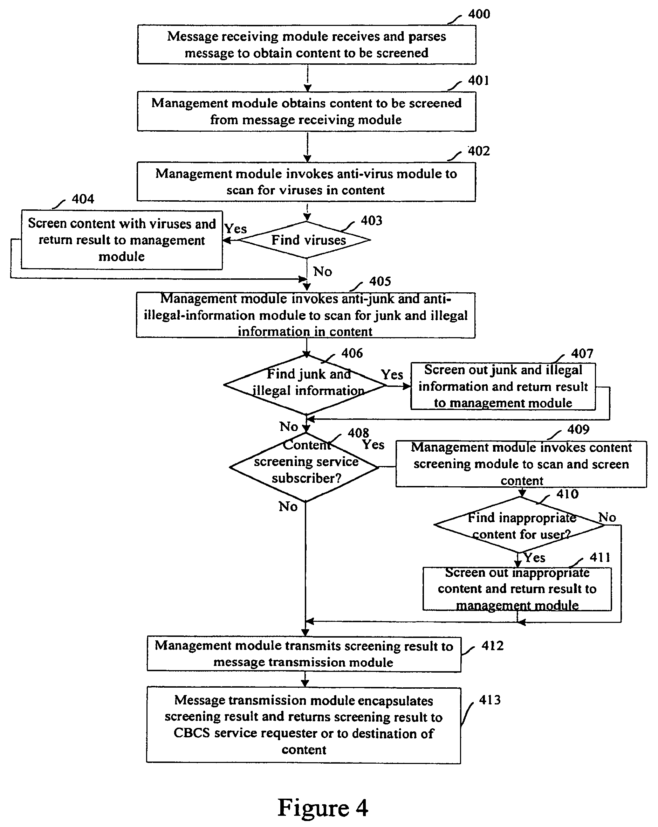

Figure 4 is a flow chart illustrating the content screening server processing a message in accordance with an embodiment of the present invention, including:
Block 400: the message receiving module receives a message and parses the message to obtain the content to be screened.
Block 401: the management module obtains the content to be screened from the message receiving module.
Block 402: the management module invokes the anti-virus module to screen viruses in the content.
Block 403: the anti-virus module performs virus scanning based on the virus features in a virus database and determines whether a virus is found; if a virus is found, Block 404 is performed, otherwise Block 405 is performed.
Block 404: the anti-virus module screens the content with viruses, returns an anti-virus result to the management module; and Block 405 is performed.
Block 405: the management module invokes the anti-junk and anti-illegal-information module to screen junk and illegal information in the content.
Block 406: the anti-junk and anti-illegal-information module performs junk and illegal information scanning based on the known junk and illegal information features in the junk and illegal information database and determines whether junk and/or illegal information is found; if junk and/or illegal information is found, Block 407 is performed, otherwise Block 408 is performed.
Block 407: the anti-junk and anti-illegal-information module screens out the junk and illegal information, returns an anti-junk and anti-illegal-information result to the management module; and Block 408 is performed.
Block 408: the management module accesses the mobile terminal user database and determines whether the mobile terminal that should receive the message containing the content has subscribed to the content screening service; if the mobile terminal has subscribed to the content screening service, Block 409 is performed, otherwise Block 412 is performed.
Block 409: the management module invokes the content screening module to screen the content.
Block 410: the content screening module detects whether the content contains information not complying with the user customized content screening criteria; if the content contains such information, Block 411 is performed; otherwise Block 412 is performed; the user customized content screening criteria are obtained by the content screening module from the mobile terminal user information in the mobile terminal user database.
Block 411: the content screening module screens out the information not complying with the user customized content screening criteria, and returns a content screening result to the management module.
Block 412: the management module generates a final screening result based on the anti-virus result, the anti-junk and anti-illegal-information result and the content screening result, and sends the final screening result to the message transmission module.
Block 413: the message transmission module encapsulates the final screening result and returns the encapsulated final screening result to the mobile terminal that should receive the message containing the content.

In the embodiment of the present invention, the content screening module may include a content parsing unit, a categorization storage and a screening judgment unit.

The content parsing unit parses the content, based on the type of the content from the management module, preliminarily into texts, graphics, audios, videos, stream media and links, etc., and sends different categories of parsed content to corresponding categorization storages respectively for storage. The categorization storages invoke the categorization entity to categorize and/or grade the content stored in the categorization storages and send a categorizing/grading result to the screening judgment unit. The screening judgment unit analyzes the content based on the categorizing/grading result and the user customized screening criteria to generate a content screening result, e.g., the screening judgment unit analyzes the content to determine whether to send/intercept/partially intercept the content. Partially intercepting the content indicates intercepting only a part of the content, e.g., in a web page, the texts are healthy but the graphics and links are unhealthy, therefore only the graphics and links are screened out. If required, the screening judgment unit may send the content screening log to the mobile terminal user database for storage.

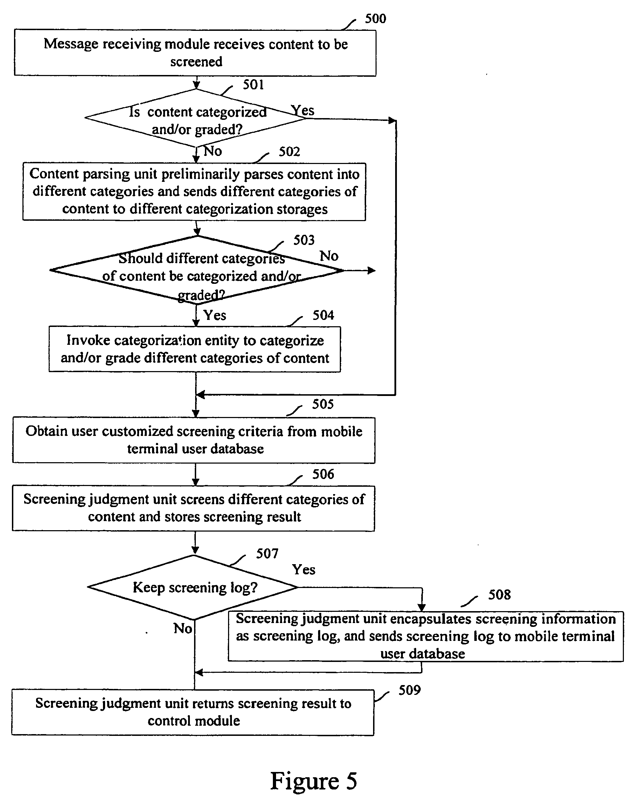

Figure 5 is a flow chart illustrating the process of content screening inside the content screening module in accordance with an embodiment of the present invention, including:
Block 500: the content parsing unit in the content screening module receives content to be screened from the management module.
Block 501: the content parsing unit determines whether the content has been categorized and/or graded; if the content has been categorized and/or graded, Block 505 is performed; otherwise Block 502 is performed.
Block 502: the content parsing unit parses the content preliminarily into different categories and sends different categories of parsed content to corresponding categorization storages respectively.
Block 503: the categorization storages determine whether the different categories of parsed content received needs to be categorized and/or graded; if the content needs to be categorized and/or graded, Block 504 is performed; otherwise Block 505 is performed.
Block 504: the categorization storages invoke the categorization entity to categorize and/or grade the different categories of parsed content, and Block 505 is performed.
Block 505: the categorization storages send the different categories of content after categorizing and/or grading to the screening judgment unit, and the screening judgment unit obtains the user customized content screening criteria from the mobile terminal user database.
Block 506: the screening judgment unit screens the different categories of content according to the user customized content screening criteria and generates a content screening result.
Block 507: the screening judgment unit determines whether to keep the screening log; if the screening log shall be kept, Block 508 is performed, otherwise Block 509 is performed.
Block 508: the screening judgment unit encapsulates the screening log, sends the encapsulated screening log to the mobile terminal user database and Block 509 is performed.
Block 509: the screening judgment unit returns the content screening result to the management module.

An embodiment of the present invention also provides a method for content screening for a mobile network, and the method for content screening may be performed in two modes based on whether the content screening server is passively invoked or actively intercepts content, namely, a Callable mode or a Proxy mode. In an embodiment of the present invention, the process of content screening is based on content categorizing and/or content grading, therefore in both of the two modes, at least two entities are involved: the content screening server and the categorization entity. The processes of content screening in the two modes are described respectively below.

The process of content screening in the Callable mode is described first.

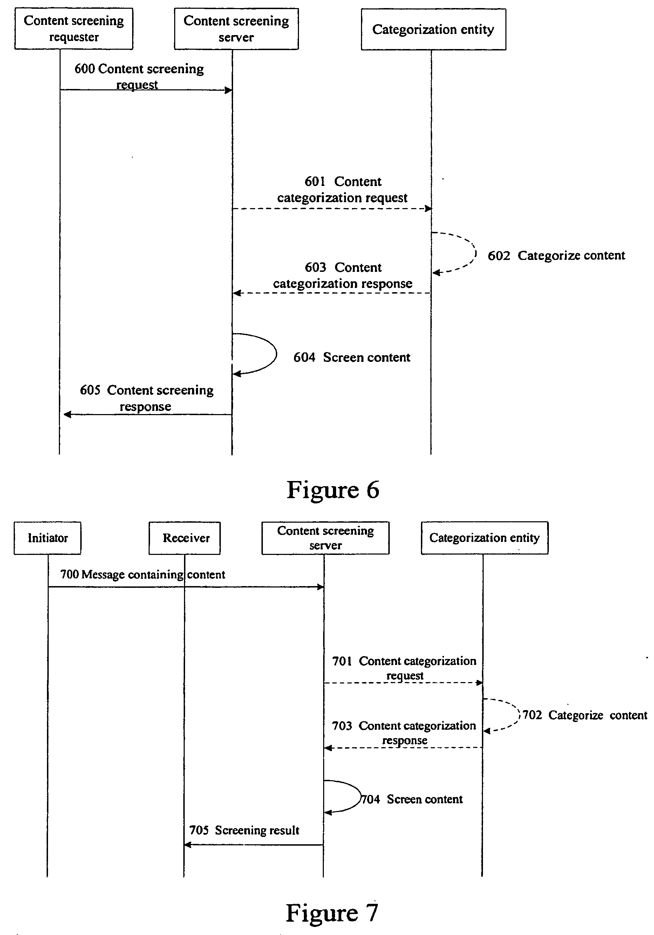

Figure 6 is a flow chart illustrating the process of content screening in the Callable mode in an embodiment of the present invention. The entities for performing the process include the content screening requester, the content screening server and the categorization entity, and the process is described below.
Block 600: the content screening requester sends a content screening request to the content screening server to request content screening service, the content screening request may contain the content to be screened, e.g., text files, web pages, emails or links.

In this embodiment, the content screening requester may be a mobile terminal with content screening user agent, or a service engine, or a proxy server, or other requesters.

Block 601: the content screening server sends a content categorization request to the categorization entity to request content categorizing and/or grading service, the content categorization request contains the content to be categorized and/or graded.

The content screening server may send multiple content categorization requests to multiple categorization entities, each of the content categorization requests contains a category of the content parsed prelimilarily from a categorization storage.

Before Block 601, the method further includes: performing preparation and preliminary processing by the content screening server in response to receiving the content screening request, for example, parsing the content screening request to obtain the content to be screened and determining whether to perform the customized content screening of the mobile terminal user.

When the customized content screening of the mobile terminal user is to be performed, the content to be screened is first parsed into texts, graphics, audios, videos, stream media and links, which are stored in different categorization storages of the content screening module. In addition, the parsed content may additionally contain categorizing and/or grading information provided by a reliable third party. In such a case, the content screening server also has to parse the additional information.

Block 602: the categorization entity receives and parses the content categorization request to obtain the content within the content categorization request, and categorizes and/or grades the content with an algorithm or according to a set of criteria.

Accordingly, when the content screening server sends multiple content categorization requests to multiple categorization entities, the categorization entities may cooperate simultaneously to speed up the processing in Block 601 and Block 602. The categorization entities may also work separately, e.g., a categorization entity may be dedicated to text processing while another categorization entity is dedicated to graphic processing, which facilitates appropriate work division among the categorization entities and further speeds up the processing. In addition, the algorithm and criteria adopted by the categorization entities have to comply with the standards set by national authorities and/or operators, e.g., the definition of eroticism graphics, the grading standards for eroticism graphics based on the parts and proportion of naked body, etc.

Block 603: the categorization entity returns a content categorization response, which contains a content categorizing and/or grading result, to the content screening server.

Block 604: according to the content categorizing and/or grading result, or according to the categorizing and/or grading information provided by a reliable third party and included in the content, which is possibly in combination with the customized content screening criteria of the mobile terminal user, the content screening server analyzes and processes the categorized and/or graded content, and screens the content to obtain a content screening result.

The customized content screening criteria of the mobile terminal user is obtained from the mobile terminal user database.

Block 605: the content screening server returns the content screening result to the content screening requester.

The content screening result includes the screened content and the reason for intercepting the content. Or the content screening result includes a message to be confirmed by the user, e.g., when the content screening server is unable to determine whether to intercept certain content, the content screening server returns a default content processing result with an explanation message to the mobile terminal user; after the mobile terminal user confirms the default content processing result , the content screening server determines whether to provide the content to the mobile terminal user.

In an embodiment of the present invention, when the content to be screened has already been categorized and/or graded, or when the content need not be categorized or graded, Block 601 may be omitted, i.e., Block 601 is optional. Accordingly Blocks 602 and 603 are also optional. In this condition, the process of content screening in the Callable mode includes: receiving a content screening request by the content screening server from the content screening requester, screening the content according to the content screening request and returning the content screening result to the content screening requester.

The process of content screening in the Proxy mode is described below.

In the Proxy mode, the process of content screening involves two entities: a message initiator and a message receiver. The message initiator may be a service platform server and the corresponding message receiver is a mobile terminal; or the message initiator may be a mobile terminal, and the corresponding message receiver is a service platform server or another mobile terminal with or without a content screening user agent.

Figure 7 is a flow chart illustrating the process of content screening in the Proxy mode in accordance with an embodiment of the present invention, and the process of content screening is described below.

Block 700: the message initiator sends a message containing content to be screened.

Block 701: the content screening server sends a content categorization request to the categorization entity to request content categorizing/grading service, and the content categorization request contains the content to be categorized and/or graded.

Before Block 701, the method further includes: intercepting and parsing the message by the content screening server and determines whether the content contained in the message should be screened.

The content screening server parses the message to obtain the message initiator and the message receiver, and determines whether the message receiver and/or initiator is a content screening service subscriber. If the message receiver is a content screening service subscriber, the content screening server carries out corresponding preparation and preliminary processing, including parsing the message to obtain the content to be screened and determining whether the content should be screened. If the message initiator is a content screening service subscriber, it is checked whether the address of the message receiver is an address which should be intercepted according to the predetermined user
customized content screening criteria, or whether the address of the message receiver is a receiving and charging address, or whether the content of the message will be charged or cause security threats. If neither the message initiator nor the message receiver is a content screening service subscriber, the content screening server just screens out viruses, junk and illegal information from the content.

Block 702: in response to receiving the content categorization request, the categorization entity parses the content categorization request to obtain the content to be screened, and categorizes and/or grades the content with an algorithm or according to a set of criteria.

Block 703: the categorization entity returns a content categorization response, which contains a content categorizing and/or grading result, to the content screening server.

Block 704: according to the content categorizing and/or grading result, or according to the categorizing and/or grading information provided by a reliable third party and included in the content, which is possibly in combination with the customized content screening criteria of the mobile terminal user, the content screening server processes the content to be screened.

Block 705: the content screening server sends the screened content to the message receiver, and the content screening server may further send to the mobile terminal the reason why the content are intercepted if all or a part of the content are intercepted; or the content screening server may send a message to be confirmed by the mobile terminal user.

In an embodiment of the present invention, when the content to be screened has already been categorized and/or graded, or when the content to be screened need not be categorized or graded, Block 701 may be omitted, i.e., Block 701 is optional. Accordingly Blocks 702 and 703 are also optional. In this situation, the process of content screening in the Proxy mode includes: intercepting content sent by a content provider to a receiver by the content screening server, screening the content by the content screening server and returning a content screening result to the receiver.

According to an embodiment of the present invention, the process of content screening in the Proxy mode is described hereafter, supposing that the mobile terminal is a mobile phone which surfs on the Internet. In the process, the content screening server screens out the content in web pages that is not suitable for the mobile terminal user.
(1) A user opens a mobile phone web browser, enters www.sina.com.cn in the web browser, and enters the user name of "Aladdin" and the password of "open sesame".
(2) The content screening server obtains, through the CBCS-3 interface, a web page request initiated by the web browser of the user to the website Sina.com. The format of the request is as follows:
   GET /index.html HTTP/1.1
   Host: www.sina.com.cn
   Proxy-Authorization: Basic QWxhZGRpbjpvcGVuIHNlc2FtZQ= =
(3) The content screening server obtains the user name and the password according to the credential of the user and determines whether the user is a content screening service subscriber. If the user is a content screening service subscriber, (4) is performed, otherwise (5) is performed.
(4) The content screening server screens the link address of www.sina.com.cn, determines whether the website is a deceiving, illegal or unsecured website, or whether the address of the website is an address to be intercepted based on the user customized screening criteria; if the website is deceiving, illegal or unsecured, or if the address of the website is an address to be intercepted based on the user customized screening criteria, the content screening server refuses to forward the web page request and returns an explanation message to the user; if the link address is acceptable, the content screening server forwards the web page request and (5) is performed.
(5) The target website processes the web page request and returns content of the web page to the user through the content screening server. The response from the website is as follows:

```
HTTP/ 1.1 200 OK
         Content-Type: application/html;charset = "utf-8"
         Content - Length: 2048
        <!DOCTYPE HTML PUBLIC "-//W3C//DTD HTML 4.0 Transitional//EN">
    <!-- saved from url=(0021)http://www.baidu.com/ -->
    <!-- saved from url=(0022)http://Internet.e-mail -->
    <HTML><HEAD><TITLE>Sina.com</TITLE>
    <script>...< /script >
    <BODY>...
    ...href="http://photo.sina.com/photol.jpg
    ...href="http://photo.sina.com/video1.avi
    ...href="http://article.sina.com/articlel .txt
    ...href="http://article.sina.com/audio1.mp3
...
    </BODY>
    </HTML>
```

The content of the web page includes graphics, videos, audios and texts.
(6) The content screening server carries out corresponding processing for the content of the web page based on whether the user is a content screening service subscriber. If the user is a content screening service subscriber, the content of the web page is sent to different categorization storages and interface CBCS-4 is invoked to send categorizing and/or grading request(s) for different categories of the content of the web page (i.e., photo1, videol, audio1 and article1). Meanwhile, the user customized content screening criteria are obtained through interface CBCS-2, and whether the content should be intercepted is determined according to the user customized content screening criteria. If the user is not a content screening service subscriber, the content screening server simply screens out viruses, junk and illegal information.

An example of the user customized content screening criteria is provided below:

```
    <?xml version="1.0"?>
     <rdf: RDF xmlns: rdf="http://www.w3.org/1999/02/22-rdf-syntax-ns#"
                 xmlns: picture="http://www.w3.org/exam/PIC#">
       <picture: Person rdf: about="http://www.w3.org/exam/PIC#***">
       <picture: type>JPG</ picture: type>
       <picture: forcelevel >4</ picture: forcelevel>
       <picture: eroticismlevel >3</ picture: eroticismlevel>
       </picture: Person>
......
       </rdf: RDF>
```

It can be seen from the example above that the user customized content screening criteria provide criteria including "pictures of forcelevel at and above 4 are forbidden" and "pictures of eroticismlevel at and above 3 are forbidden". The content screening server intercepts the pictures of force and eroticism according to the criteria and returns an alert to the user, explaining the reason why the content are intercepted.
(7) The content screening server sends the screened content to the user.

In the embodiment of the present invention, the content screening apparatus is configured at the egress of the mobile communication network, which protects networks managed by a mobile operator from viruses, junk mails and illegal information of external networks, improves the service quality of the mobile operator and thus wins potential mobile terminal users for the mobile operator. Furthermore, with the content screening apparatus configured unifiedly at the egress of the mobile communication network, it is not necessary to configure a content screening apparatus on every service platform and thus the cost is reduced.

According to the embodiments of the present invention, a new mobile service is created, which provides different content screening criteria to satisfy the demands of different mobile terminal users while bringing extra profits for mobile operators.

The content screening server and mobile terminal user database provided in the embodiments of the present invention may be configured separately, which makes it convenient for mobile operators to make content screening service provided by a third party and guarantees the security of the information of the mobile terminal users subscribing to the content screening service.

The content screening server and the categorization entity provided in the embodiments of the present invention may be configured separately, which facilitates the distribution arrangement of the two network entities. Therefore, a content screening entity may invoke multiple categorization entities to speed up the process of content screening; and multiple entities with the screening function provided in the embodiments of the present invention may be configured in the network.

The foregoing are only preferred embodiments of the present invention and are not for use in limiting the present invention, any modification, equivalent replacement or improvement made under principles of the present invention is included in the protection scope thereof.

## Claims

1. A content screening apparatus for a mobile network, the apparatus comprising:
a content screening server, operable for intercepting content from a content provider to a mobile terminal and determining whether the intercepted content from the content provider to the mobile terminal should be categorized and/or graded before screening the intercepted content, wherein the content screening server is connected to mobile service platforms and Internet application platforms wherein content from the Internet is screened by the content screening server before being sent to the mobile terminal, and wherein content from short messages, multimedia messages and Wireless Application Protocol, WAP, applications managed by a mobile operator is screened by the content screening server before being sent to the mobile terminal; wherein
the content screening server is further operable for sending a content categorization request if a determination result is yes, and the content screening apparatus further comprises:
a categorization entity, operable for categorizing the intercepted content according to the content categorization request from the content screening server, generating a categorizing result and sending the categorizing result to the content screening server;
a mobile terminal user database, operable for sending user customized screening criteria stored in the mobile terminal user database to the content screening server, and storing a screening log from the content screening server; wherein
the content screening server is further operable for screening the categorized and/or graded content according to the user customized screening criteria from the mobile terminal user database and the categorizing and/or grading result in the content categorization response, and sending the screening log generated to the mobile terminal user database.

2. The apparatus of claim 1, wherein the content screening server comprises:
a message receiving module, a management module, an anti-virus module, an anti-junk and anti-illegal-information module, a content screening module and a message transmission module; wherein
the message receiving module is operable for parsing the content intercepted by itself, and sending parsed content to the management module;
the management module is operable for obtaining the content from the message receiving module, instructing the anti-virus module, the anti-junk and anti-illegal-information module and the content screening module to screen the content, generating the screening result based on an anti-virus result from the anti-virus module, an anti-junk and anti-illegal-information result from the anti-junk and anti-illegal-information module and a content screening result from the content screening module, and sending the screening result generated by the management module to the message transmission module;
the anti-virus module is operable for scanning, identifying and screening out viruses in the content based on virus samples according to an instruction from the management module, and sending the anti-virus result to the management module;
the anti-junk and anti-illegal-information module is operable for screening out junk and illegal information in the content based on known junk and illegal information features according to an instruction from the management module, and sending the anti-junk and anti-illegal-information result to the management module;
the content screening module is operable for screening the content based on the categorizing and/or grading result and the user customized screening criteria according to an instruction from the management module, sending the content screening result to the management module and the screening log to the mobile terminal user database; and
the message transmission module is operable for sending the screening result from the management module to the entity requesting content screening or the receiver of the content.

3. The apparatus of claim 2, wherein the message receiving module comprises a buffer operable for buffering the content to be screened;
the anti-virus module comprises a virus database operable for storing the virus samples;
the anti-junk and anti-illegal-information module comprises a junk and illegal information database, operable for storing the known junk and illegal information features ; and
the message transmission module comprises a buffer, operable for buffering the screening result to be sent.

4. A content screening system, the system comprising:
a content screening apparatus according to any of claims 1 to 3; and
a message receiver, operable for sending a message containing content to be screened for screening;
wherein the content screening apparatus is operable for screening content in a message to be received by the message receiver, and sending a screening result to the message receiver, and sending a screening result to the message receiver.

5. The content screening system of claim 4, wherein a mobile terminal is configured with a content screening user agent operable for sending the message containing the content to be screened to the content screening apparatus for screening.

6. The content screening system of any of claims 4-5, further comprising:
a service platform server, operable for sending the message containing the content to be screened to a mobile terminal.

7. The content screening system of any of claims 4-5, further comprising:
a charging system, operable for charging according to a screening bill sent by the content screening server when the content screening server screens the content.

8. A method for content screening for a mobile network, the method comprising:
intercepting content from a content provider to a mobile terminal by a content screening server,
wherein the content screening server is connected to mobile server platforms and Internet application platforms, wherein content from the Internet is screened by the content screening server before being sent to the mobile terminal, and wherein content from short messages,
multimedia messages and Wireless Application Protocol, WAP, applications managed by a mobile operator is screened by the content screening server before being sent to the mobile terminal;
determining whether the intercepted content from the content provider to the mobile terminal should be categorized and/or graded before screening the intercepted content;
sending, if a determination result is yes, a content categorization request to a categorization entity;
categorizing and/or grading the intercepted content to be screed by the categorization entity in response to receiving the content categorization request, and sending to the content screening server a content categorization response containing a categorizing and/or grading result;
processing the categorized and/or graded content according to user customized content screening criteria stored in a mobile terminal user database and the categorizing and/or grading result in the content categorization response; and
sending the screening log generated to the mobile terminal user database.

## Patentansprüche

1. Eine Content-Screening-Vorrichtung für ein mobiles Netzwerk, wobei die Vorrichtung Folgendes umfasst:
einen Content-Screening-Server, der betrieben werden kann zum Abfangen von Inhalten von einem Inhaltsanbieter an ein mobiles Endgerät und zum Ermitteln, ob der abgefangene Inhalt vom Inhaltsanbieter an das mobile Endgerät vor dem Screenen des abgefangenen Inhalts kategorisiert und/oder klassifiziert werden sollte, wobei der Content-Screening-Server mit mobilen Dienstleistungsplattformen und Internet-Anwendungsplattformen verbunden ist, wobei Inhalte aus dem Internet vom Content-Screening-Server gescreent werden, bevor sie an das mobile Endgerät gesendet werden, und wobei Inhalte aus Kurznachrichten, Multimedia-Nachrichten und Wireless Application Protocol-(WAP)-Anwendungen, die von einem Mobilfunkbetreiber verwaltet werden, vom Content-Screening-Server gescreent werden, bevor sie an das mobile Endgerät gesendet werden; wobei
der Content-Screening-Server ferner zum Senden einer Anfrage für eine Content-Kategorisierung betrieben werden kann, falls ein Ermittlungsergebnis ja lautet, und die Content-Screening-Vorrichtung ferner Folgendes umfasst:
eine Kategorisierungseinheit, die betrieben werden kann zum Kategorisieren der gemäß der Anfrage zur Inhaltekategorisierung abgefangenen Inhalte vom Content-Screening-Server, die ein Kategorisierungsergebnis erzeugt und das Kategorisierungsergebnis an den Content-Screening-Server sendet;
eine Nutzerdatenbank eines mobilen Endgeräts, die zum Senden benutzerdefinierter Screening-Kriterien, die in der Nutzerdatenbank des mobilen Endgeräts gespeichert sind, an den Content-Screening-Server und Speichern eines Screening-Protokolls vom Content-Screening-Server betrieben werden kann; wobei
der Content-Screening-Server ferner zum Screenen der kategorisierten und/oder klassifizierten Inhalte gemäß den benutzerdefinierten Screening-Kriterien aus der Nutzerdatenbank des mobilen Endgeräts und des Kategorisierungs- und/oder Klassifizierungsergebnisses in der Inhaltekategorisierungsantwort und Senden des erzeugten Screening-Protokolls an die Nutzerdatenbank des mobilen Endgeräts betrieben werden kann.

2. Vorrichtung nach Anspruch 1, wobei der Content-Screening-Server Folgendes umfassen:
ein Nachrichtenempfangsmodul, ein Verwaltungsmodul, ein Anti-Virus-Modul, ein Anti-Spam- und Anti-illegale-Informationen-Modul, ein Content-Screening-Modul und ein Nachrichtenübertragungsmodul; wobei
das Nachrichtenempfangsmodul zum Parsen des Inhalts, der von ihm selbst abgefangen wurde, und Senden von geparstem Inhalt an das Verwaltungsmodul betrieben werden kann;
das Verwaltungsmodul betrieben werden kann zum Erhalten der Inhalte vom Nachrichtenempfangsmodul, zum Anweisen des Anti-Virus-Moduls, des Anti-Spam-Moduls und des Anti-illegale-Informationen-Moduls und des Content-Screening-Moduls, die Inhalte zu screenen, wodurch das Screening-Ergebnis erzeugt wird auf Grundlage eines Anti-Virus-Ergebnisses vom Anti-Virus-Modul, eines Anti-Spam- und Anti-illegale-Informationen-Ergebnisses vom Anti-Spam- und Anti-illegale-Informationen-Modul und eines Content-Screening-Ergebnisses vom Content-Screening-Modul, und zum Senden des Screening-Ergebnisses, das vom Verwaltungsmodul erzeugt wurde, an das Nachrichtenübertragungsmodul;
das Anti-Virus-Modul zum Scannen, Identifizieren und Herausfiltern von Viren in den Inhalten auf Grundlage von Virenmustern gemäß einer Anweisung aus dem Verwaltungsmodul und Senden des Anti-Virus-Ergebnisses an das Verwaltungsmodul betrieben werden kann;
das Anti-Spam- und Anti-illegale-Informationen-Modul betrieben werden kann zum Herausfiltern von Spam und illegalen Informationen in den Inhalten auf Grundlage bekannter Eigenschaften von Spam und illegalen Informationen gemäß einer Anweisung aus dem Verwaltungsmodul und zum Senden des Anti-Spam- und Anti-illegale-Informationen-Ergebnisses an das Verwaltungsmodul;
das Content-Screening-Modul zum Screenen des Inhalts auf Grundlage des Kategorisierungs- und/oder Klassifizierungsergebnisses und der benutzerdefinierten Screening-Kriterien gemäß einer Anweisung aus dem Verwaltungsmodul, zum Senden des Content-Screening-Ergebnisses an das Verwaltungsmodul und des Screening-Protokolls an die Nutzerdatenbank des mobilen Endgeräts betrieben werden kann; und
das Nachrichtenübertragungsmodul betrieben werden kann, um das Screening-Ergebnis aus dem Verwaltungsmodul an die Einheit, die das Screenen der Inhalte angefragt hat, oder den Empfänger der Inhalte zu senden.

3. Vorrichtung nach Anspruch 2, wobei das Nachrichtenempfangsmodul einen Puffer umfasst, der zum Zwischenspeichern des zu screenenden Inhalts betrieben werden kann;
das Anti-Virus-Modul eine Virusdatenbank umfasst, die zum Speichern der Virusmuster betrieben werden kann;
das Anti-Spam- und Anti-illegale-Informationen-Modul eine Spam- und Illegale-Informationen-Datenbank umfasst, die zum Speichern der Eigenschaften von bekanntem Spam und bekannten illegalen Informationen betrieben werden kann; und
das Nachrichtenübertragungsmodul einen Puffer umfasst, der zum Zwischenspeichern des Screening-Ergebnisses, das gesendet werden soll, betrieben werden kann.

4. Content-Screening-System, wobei das System Folgendes umfasst:
eine Content-Screening-Vorrichtung nach einem der Ansprüche 1 bis 3; und
einen Nachrichtenempfänger, der zum Senden einer Nachricht, die Inhalte enthält, die für das Screening gescreent werden sollen, betrieben werden kann;
wobei die Content-Screening-Vorrichtung betrieben werden kann zum Screenen von Inhalten in einer Nachricht, die vom Nachrichtenempfänger empfangen werden soll, und Senden eines Screening-Ergebnisses an den Nachrichtenempfänger.

5. Content-Screening-System nach Anspruch 4, wobei ein mobiles Endgerät mit einem Content-Screening-User-Agent konfiguriert ist, der zum Senden der Nachricht, die die zu screenenden Inhalte enthält, an die Content-Screening-Vorrichtung betrieben werden kann.

6. Content-Screening-System nach einem der Ansprüche 4 bis 5, ferner umfassend:
einen Dienstleistungsplattform-Server, der zum Senden einer Nachricht, welche die zu screenenden Inhalte enthält, an ein mobiles Endgerät betrieben werden kann.

7. Content-Screening-System nach einem der Ansprüche 4 bis 5, ferner umfassend:
ein Ladesystem, das zum Laden gemäß einer Screening-Liste, die vom Content-Screening-Server gesendet wird, wenn der Content-Screening-Server die Inhalte screent, betrieben werden kann.

8. Verfahren zum Screenen von Inhalten für ein mobiles Netzwerk, wobei das Verfahren Folgendes umfasst:
Abfangen von Inhalten eines Inhaltsanbieters an ein mobiles Endgerät durch einen Content-Screening-Server, wobei der Content-Screening-Server mit mobilen Dienstleistungsplattformen und Internet-Anwendungsplattformen verbunden ist, wobei die Inhalte aus dem Internet durch den Content-Screening-Server gescreent werden, bevor sie an das mobile Endgerät gesendet werden, und wobei Inhalte aus Kurznachrichten, Multimedia-Nachrichten und Wireless Application Protocol-(WAP)-Anwendungen, die von einem Mobilfunkbetreiber verwaltet werden, durch den Content-Screening-Server gescreent werden, bevor sie an das mobile Endgerät gesendet werden;
Ermitteln, ob die abgefangenen Inhalte vom Inhaltsanbieter an das mobile Endgerät kategorisiert und/oder klassifiziert werden sollten, bevor die abgefangenen Inhalte gescreent werden;
Senden, falls das Ermittlungsergebnis ja ist, einer Anfrage zur Kategorisierung der Inhalte an eine Kategorisierungseinheit;
Kategorisieren und/oder Klassifizieren der abgefangenen Inhalte, die als Antwort auf den Empfang der Anfrage zur Kategorisierung von Inhalten durch die Kategorisierungseinheit gescreent werden sollen, und Senden einer Content-Kategorisierungsantwort, die ein Kategorisierungs- und/oder Klassifizierungsergebnis enthält, an den Content-Screening-Server;
Verarbeiten der kategorisierten und/oder klassifizierten Inhalte gemäß den benutzerdefinierten Kategorisierungskriterien, die in einer Nutzerdatenbank eines mobilen Endgeräts gespeichert sind, und des Kategorisierungs- und/oder Klassifizierungsergebnisses in der Inhalte-Kategorisierungsantwort,
Senden des erzeugten Screening-Protokolls an die Nutzerdatenbank des mobilen Endgeräts.

## Revendications

1. Appareil de filtrage de contenu pour un réseau mobile, l'appareil comprenant :
un serveur de filtrage de contenu, utilisable pour intercepter le contenu entre un fournisseur de contenu et un terminal mobile et déterminer si le contenu intercepté entre le fournisseur de contenu et le terminal mobile doit être catégorisé et/ou classé avant le filtrage du contenu intercepté, dans lequel le serveur de filtrage de contenu est connecté à des plates-formes de service mobiles et des plates-formes d'application Internet, dans lequel le contenu venant d'Internet est filtré par le serveur de filtrage de contenu avant d'être envoyé au terminal mobile, et dans lequel le contenu des messages courts, des messages multimédia et des applications de protocole d'application sans fil, WAP, géré par un opérateur mobile est filtré par le serveur de filtrage de contenu avant d'être envoyé au terminal mobile ; dans lequel
le serveur de filtrage de contenu est en outre utilisable pour envoyer une demande de catégorisation du contenu si un résultat de détermination est oui, et l'appareil de filtrage de contenu comprend en outre :
une entité de catégorisation, utilisable pour catégoriser le contenu intercepté conformément à la demande de catégorisation du contenu reçue du serveur de filtrage de contenu, générer un résultat de catégorisation et envoyer le résultat de catégorisation au serveur de filtrage de contenu ;
une base de données d'utilisateur de terminal mobile, utilisable pour envoyer des critères de filtrage personnalisés pour l'utilisateur stockés dans la base de données d'utilisateur de terminal mobile au serveur de filtrage de contenu, et stocker un journal de filtrage provenant du serveur de filtrage de contenu ; dans lequel
le serveur de filtrage de contenu est en outre utilisable pour filtrer le contenu catégorisé et/ou classé conformément aux critères de filtrage personnalisés pour l'utilisateur provenant de la base de données d'utilisateur de terminal mobile et le résultat de catégorisation et/ou de classement dans la réponse de catégorisation du contenu, et envoyer le journal de filtrage généré à la base de données d'utilisateur de terminal mobile.

2. Appareil selon la revendication 1, dans lequel le serveur de filtrage de contenu comprend :
un module de réception des messages, un module de gestion, un module antivirus, un module anti-messages indésirables et anti-informations illégales, un module de filtrage de contenu et un module de transmission des messages ; dans lequel
le module de réception des messages est utilisable pour analyser le contenu intercepté par lui-même, et envoyer le contenu analysé au module de gestion ;
le module de gestion est utilisable pour obtenir le contenu du module de réception des messages, donner au module antivirus, au module anti-messages indésirables et anti-informations illégales et au module de filtrage de contenu la consigne de filtrer le contenu, générer les résultats de filtrage en fonction d'un résultat antivirus du module antivirus, d'un résultat anti-messages indésirables et anti-informations illégales du module anti-messages indésirables et anti-déformations illégales et d'un résultat de filtrage de contenu du module de filtrage de contenu, et envoyer le résultat de filtrage généré par le module de gestion au module de transmission des messages ;
le module antivirus est utilisable pour rechercher, identifier et éliminer les virus dans le contenu en fonction d'échantillons de virus conformément à une instruction du module de gestion, et envoyer le résultat antivirus au module de gestion ;
le module anti-messages indésirables et anti-informations illégales est utilisable pour éliminer les messages indésirables et les informations illégales dans le contenu en fonction de caractéristiques de messages indésirables et d'informations illégales connues conformément à une instruction du module de gestion, et envoyer le résultat anti-messages indésirables et anti-informations illégales au module de gestion ;
le module de filtrage de contenu est utilisable pour filtrer le contenu en fonction du résultat de catégorisation et/ou de classement et des critères de filtrage personnalisés pour l'utilisateur conformément à une instruction du module de gestion, envoyer le résultat de filtrage de contenu au module de gestion et le journal de filtrage à la base de données d'utilisateur de terminal mobile ; et
le module de transmission de messages est utilisable pour envoyer le résultat de filtrage du module de gestion à l'entité demandant le filtrage de contenu ou au destinataire du contenu.

3. Appareil selon la revendication 2, dans lequel le module de réception des messages comprend une mémoire tampon utilisable pour mettre en tampon le contenu à filtrer ;
le module antivirus comprend une base de données de virus utilisable pour stocker les échantillons de virus ;
le module anti-messages indésirables et anti-informations illégales comprend une base de données de messages indésirables et d'informations illégales, utilisable pour stocker les caractéristiques de messages indésirables et d'informations illégales connues ; et
le module de transmission de messages comprend une mémoire tampon utilisable pour mettre en tampon le résultat de filtrage à envoyer.

4. Système de filtrage de contenu, le système comprenant :
un appareil de filtrage de contenu selon l'une quelconque des revendications 1 à 3 ; et
un récepteur de messages, utilisable pour envoyer un message contenant le contenu à filtrer pour filtrage ;
dans lequel l'appareil de filtrage est utilisable pour filtrer le contenu dans un message devant être reçu par le récepteur de messages, et envoyer un résultat de filtrage au récepteur de messages.

5. Système de filtrage de contenu selon la revendication 4, dans lequel un terminal mobile est configuré avec un agent utilisateur de filtrage de contenu utilisable pour envoyer le message contenant le contenu à filtrer à l'appareil de filtrage de contenu pour filtrage.

6. Système de filtrage de contenu selon l'une quelconque des revendications 4-5, comprenant en outre :
un serveur de plate-forme de service, utilisable pour envoyer le message contenant le contenu à filtrer à un terminal mobile.

7. Système de filtrage de contenu selon l'une quelconque des revendications 4-5, comprenant en outre :
un système de charge, utilisable pour charger conformément à un avis de filtrage envoyé par le serveur de filtrage de contenu lorsque le serveur de filtrage de contenu filtre le contenu.

8. Procédé pour filtrer le contenu pour un réseau mobile, le procédé comprenant les étapes consistant à :
faire intercepter le contenu entre un fournisseur de contenu et un terminal mobile par un serveur de filtrage de contenu, le serveur de filtrage de contenu étant connecté à des plates-formes de service mobiles et des plates-formes d'application Internet, le contenu provenant d'Internet étant filtré par le serveur de filtrage de contenu avant d'être envoyé au terminal mobile, et le contenu de messages courts, de messages multimédia et d'applications de protocole d'application sans fil, WAP, géré par un opérateur mobile est filtré par le serveur de filtrage de contenu avant d'être envoyé au terminal mobile ;
déterminer si le contenu intercepté entre le fournisseur de contenu et le terminal mobile doit être catégorisé et/ou classé avant filtrage du contenu intercepté ;
envoyer, si le résultat de la détermination est oui, une demande de catégorisation du contenu à une entité de catégorisation ;
catégoriser et/ou classer le contenu intercepté devant être filtré par l'entité de catégorisation en réponse à la réception de la demande de catégorisation du contenu, et envoyer au serveur de filtrage de contenu une réponse de catégorisation du contenu contenant un résultat de catégorisation et/ou de classement ;
traiter le contenu catégorisé et/ou classé conformément aux critères de filtrage de contenu personnalisé pour l'utilisateur stockés dans une base de données d'utilisateur de terminal mobile et le résultat de catégorisation et/ou de classement dans la réponse de catégorisation du contenu ;
envoyer le journal de filtrage à la base de données d'utilisateur de terminal mobile.
